# EUROPÄISCHE PATENTANMELDUNG

(11) **EP 2 216 611 A1**
(43) Veröffentlichungstag der Anmeldung: **11.08.2010**
(21) Anmeldenummer: 10151147.5
(22) Anmeldetag: 20.01.2010
(51) Int. Cl.: F25B 15/02, B60H 1/32

(54) **Kältemittelreservoir für eine mobile Absorptionsklimaanlage**

(30) Priorität: 06.02.2009 DE 102009003446
(71) Anmelder: Webasto AG, 82131 Stockdorf (DE)
(72) Erfinder: Zimmermann, Werner, 82194, Gröbenzell (DE)
(74) Vertreter: Ciesla, Bettina

(57) **Zusammenfassung**

Es wird ein Kältemittelreservoir (20) für eine mobile Absorptionsklimaanlagc bereitgestellt. Das Kältemittelreservoir weist auf: zumindest einen ersten Reservoirbereich (20a) zum Aufnehmen von Kältemittel und zumindest einen von dem ersten Reservoirbereich abgetrennten zweiten Reservoirbereich (20b) zum Aufnehmen von Kältemittel. Das Kältemittelreservoir ist (20) derart eingerichtet, dass bei Unterschreiten einer vorbestimmten Kältemittelmenge in dem ersten Reservoirbereich (20a) Kältemittel aus dem zweiten Reservoirbereich (20b) in den ersten Reservoirbereich (20a) übergeführt wird.

## Beschreibung

Die vorliegende Erfindung betrifft ein Kältemittelreservoir für eine mobile Absorptionsklimaanlage, einen Absorptionsklimaanlagen-Kältemittelkreis für eine mobile Absorptionsklimaanlage, eine mobile Absorptionsklimaanlage sowie ein Verfahren zum Betreiben einer mobilen Absorptionsklimaanlage.

Es ist bekannt, zur Kühlung von Räumen, wie z.B. Fahrzeuginnenräumen, Absorptionsklimaanlagen zu verwenden. Absorptionsklimaanlagen haben gegenüber herkömmlichen Klimaanlagen, wie z.B. herkömmlichen kompressorbetriebenen Kraftfahrzeug-Klimaanlagen, den Vorteil, dass umweltfreundlichere Kältemittel eingesetzt werden können. Ferner ist bei Absorptionsklimaanlagen vorteilhaft, dass keine mechanische Energie für die Komprimierung von Kältemittel aufgewendet sondern lediglich Wärmeenergie und eine geringe Pumpleistung für den Betrieb der Absorptionsklimaanlage bereitgestellt werden müssen.

Aus dem Stand der Technik sind mobile Absorptionsklimaanlagen bekannt. Im Rahmen dieser Beschreibung wird unter einer mobilen Klimaanlage eine solche verstanden, die für den Einsatz in mobilen Anwendungen ausgelegt und dementsprechend angepasst ist. Dies bedeutet insbesondere, dass sie transportabel ist (ggf. in einem Fahrzeug eingebaut oder lediglich für den Transport darin untergebracht) und nicht ausschließlich für einen dauerhaften, stationären Einsatz, wie es beispielsweise bei der dauerhaften Installation einer Gebäudeklimaanlage in einem Gebäude der Fall ist, ausgelegt ist. Die mobile Klimaanlage ist insbesondere zur Klimatisierung eines Fahrzeug-Innenraums, wie z.B. eines Land-, Wasser- oder Luftfahrzeugs, sowie eines teiloffenen Raumes, wie er teilweise auf Schiffen, insbesondere Yachten, aufzufinden ist, ausgelegt. Ferner kann die mobile Klimaanlage auch vorübergehend stationär eingesetzt werden, wie z.B. in großen Zelten oder Containern wie insbesondere z.B. Baucontainem, etc. Unter einer mobilen Klimaanlage wird somit auch eine solche verstanden, die für einen festen Einbau in einer mobilen Vorrichtung wie z.B. einem Fahrzeug ausgestaltet ist.

Für den Betrieb einer Absorptionsklimaanlage wird eine Mischung aus mindestens zwei mischbaren Substanzen, nämlich einem Kältemittel und einem Absorptionsmittel, benötigt. Diese Mischung, die auch als binäre Mischung bezeichnet wird, wird in einem Desorber (auch als Boiler oder Generator bezeichnet) erhitzt. Als binäre Mischung wird beispielsweise Wasser (Kältemittel) und Salz (Absorptionsmittel), wie beispielsweise Lithiumbromid (LiBr), eingesetzt. Eine weitere mögliche Kombination ist beispielsweise Ammoniak (NH₃) (Kältemittel) und Wasser (Absorptionsmittel). Durch das Erhitzen in dem Desorber verdampft eine der beiden Substanzen, die im Folgenden als Kältemittel bezeichnet wird, während im Desorber eine mit dem Absorptionsmittel angereicherte Mischung zurückbleibt. Der Kältemitteldampf wird in einen Kondensator geleitet, in dem das Kältemittel wieder in die flüssige Phase zurückgeführt wird. In einem Verdampfer wird anschließend Kältemittel verdampft, wobei während dieses Verdampfungsvorganges Kühlleistung bereitgestellt wird, die zur Kühlung eines zu klimatisierenden Raumes, wie beispielsweise zur Kühlung eines Fahrzeuginnenraums eines Kraftfahrzeuges, abgeführt wird. In einem Absorber wird der Kältemitteldampf in die mit Absorptionsmittel angereicherte Mischung, die in der Regel dem Desorber entnommen wird, absorbiert.

In der Regel ist in mobilen Absorptionsklimaanlagen im Bereich des Verdampfers ein Kältemittel-Rezirkulationskreislauf (im Folgenden: Kältemittelkreis) zur Rezirkulation von Kältemittel durch den Verdampfer vorgesehen. Der Kältemittelkreis ist dabei mit dem Verdampfer verbunden und weist in der Regel ein Kältemittelreservoir zur Speicherung von Kältemittel, eine Kältemittelpumpe zur Förderung von Kältemittel aus dem Kältemittelreservoir durch den Verdampfer und zur Rückführung des nicht verdampften Kältemittels zurück in das Kältemittelreservoir auf. Daneben können auch noch weitere Bauteile in dem Kältemittelkreis vorgesehen sein. Wird beispielsweise die durch den Verdampfungsvorgang des Kältemittels bereitgestellte Kühlleistung über das rezirkulierende Kältemittel abgeführt, so kann zusätzlich in dem Kältemittelkreis ein Wärmetauscher vorgesehen sein, der von dem Kältemittel durchströmt wird und über den Kühlleistung abgeführt wird. Bei dieser Anordnung dient das Kältemittel gleichzeitig als Kühlmittel in dem die Kälte abführenden Kühlmittelkreislauf. Es gibt jedoch auch Anordnungen, in den das Abführen der Kühlleistung über ein von dem Kältemittel verschiedenes Kühlmittel erfolgt, das in einem getrennten Kühlmittelkreislauf zirkuliert wird.

Zum Ausgleich des aus dem Kältemittelkreis verdampften Kältemittels wird bei einem kontinuierlichen Betrieb aus dem Kondensator flüssiges Kältemittel in den Kältemittelkreis nachgeführt.

Parallel zu dem oberhalb beschriebenen Kältemittelkreis ist in der Regel in mobilen Absorptionsklimaanlagen im Bereich des Absorbers ein Rezirkulationskreislauf für eine mit dem Absorptionsmittel angereicherte Mischung (im Folgenden: Absorptionsmittelkreis) zur Rezirkulation von mit dem Absorptionsmittel angereicherter Mischung durch den Absorber vorgesehen. Der Absorptionsmittelkreis ist dabei mit dem Absorber verbunden und weist in der Regel ein Reservoir zur Speicherung von mit dem Absorptionsmittel angereicherter Mischung, eine Absorptionsmittelpumpe zur Förderung von mit dem Absorptionsmittel angereicherter Mischung aus dem Absorptionsmittelreservoir durch den Absorber und zur Rückführung der mit dem Absorptionsmittel angereicherten Mischung, in die Kältemittel absorbiert wurde, zurück in das Absorptionsmittelreservoir auf. Daneben können auch noch weitere Bauteile in dem Absorptionsmittelkreis vorgesehen sein. Insbesondere kann ein Wärmetauscher zur Kühlung der mit dem Absorptionsmittel angereicherten Mischung vorgesehen sein.

Dabei wird in dem kontinuierlichen Betrieb dem Absorptionsmittelkreis aus dem Desorber eine Mischung zugeführt, in der eine höhere Konzentration an Absorptionsmittel enthalten ist als in der Mischung, die in dem Absorptionsmittelreservoir enthalten ist. Ferner wird in dem kontinuierlichen Betrieb aus dem Absorptionsmittelkreis eine Mischung, in der eine niedrigere Konzentration an Absorptionsmittel enthalten ist als in der Mischung, die in dem Desorber enthalten ist, in den Desorber geleitet.

Wie aus der obigen Beschreibung ersichtlich ist, ist es für einen kontinuierlichen, dauerhaften Betrieb der mobilen Absorptionsklimaanlage erforderlich, dass in etwa die Menge an Kältemittel, die in dem Bereich des Verdampfers verdampft und in dem Bereich des Absorbers absorbiert wird, über den Desorber und den Kondensator wieder dem Kältemittelkreis zugeführt wird. Bei einer mobilen Absorptionsklimaanlage der beschriebenen Art ist es jedoch auch möglich, für eine gewisse Zeit den Verdampfungs- und Absorptionsprozess aufrechtzuerhalten, selbst wenn in dem Desorber keine oder keine ausreichende Desorption erfolgt und somit kein oder nur wenig Kältemittelnachschub dem Kältemittelkreis nachgeführt wird. Dies kann z.B. bei einer Anwendung in einem Kraftfahrzeug der Fall sein, wenn keine oder keine ausreichende Abwärme eines Antriebsmotors zur Verfügung steht, z.B. bei abgeschaltetem Antriebsmotor. Aus diesem Grund wird ein derartiger Betrieb auch als Standklimatisierungsbetrieb bezeichnet.

Bei einem derartigen Standklimatisierungsbetrieb wird im Bereich des Verdampfers und des Absorbers Kältemittel aus dem Kältemittelkreis in den Absorptionsmittelkreis übergeführt, wodurch sich mit der Zeit die Kältemittelkonzentration in dem Absorptionsmittelkreis erhöht und die Kältemittelmenge in dem Kältemittelkreis abnimmt. Eine weitere Aufrechterhaltung des Verdampfungs- und Absorptionsprozesses ist nicht mehr möglich, wenn die Konzentration des Kältemittels in dem Absorptionsmittelkreis so hoch wird, dass keine nennenswerte Absorption mehr stattfindet, bzw. die in dem Kältemittelkreis zur Verfügung stehende Kältemittelmenge verdampft wurde. Wenn ein möglichst langer Standklimatisierungsbetrieb erzielt werden soll, muss also sichergestellt werden, dass einerseits die Kältemittelkonzentration in dem Absorptionsmittelkreis bzw. auf der Seite des Absorbers nicht zu hoch wird und anderseits auf der Seite des Verdampfers genügend Kältemittel zum Verdampfen bereitsteht.

Folglich könnte die erreichbare Standklimatisierungsdauer z.B. durch Vergrößern des auf der Absorberseite zur Verfügung stehenden Volumens an absorptionsmittelreicher Mischung und durch Vergrößern des Volumens an Kältemittel auf der Verdampferseite erhöht werden. Eine Erhöhung der in einem Kältemittelreservoir in dem Kältemittelkreis zur Verfügung stehenden Menge an Kältemittel hat jedoch den Nachteil, dass die zur Kühlung zur Verfügung stehende Kälteleistung auf der Verdampferseite nur langsamer bereitgestellt werden kann. Dies ist dadurch bedingt, dass die größere Menge an Kältemittel eine größere Wärmekapazität aufweist und somit zunächst relativ viel Kühlleistung dafür benötigt wird, die große Menge an Kältemittel auf ein niedrigeres Temperaturniveau abzukühlen, das für einen Klimatisierungsbetrieb erforderlich ist. Daher verschlechtert eine solche Lösung das Ansprechverhalten einer mobilen Absorptionsklimaanlage erheblich und es wird keine hohe Startleistungsfähigkeit der mobilen Absorptionsklimaanlage bereitgestellt.

Es ist Aufgabe der vorliegenden Erfindung, eine verlängerte Standklimatisierungsfähigkeit bereitzustellen und gleichzeitig ein gutes Ansprechverhalten und eine hohe Startleistungsfähigkeit einer mobilen Absorptionsklimaanlage zu erreichen.

Die Aufgabe wird durch ein Kältemittelreservoir für eine mobile Absorptionsklimaanlage nach Anspruch 1 gelöst. Das Kältemittelreservoir weist auf: zumindest einen ersten Reservoirbereich zum Aufnehmen von Kältemittel und zumindest einen von dem ersten Reservoirbereich abgetrennten zweiten Reservoirbereich zum Aufnehmen von Kältemittel. Das Kältemittelreservoir ist derart eingerichtet, dass bei Unterschreiten einer vorbestimmten Kältemittelmenge in dem ersten Reservoirbereich Kältemittel aus dem zweiten Reservoirbereich in den ersten Reservoirbereich übergeführt wird. Durch die Gesamtvolumina beider Reservoirbereiche steht eine große Menge an Kältemittel bereit, die eine lange andauernde Standklimatisierung sicherstellt. Dadurch, dass das Kältemittelreservoir den ersten und den von diesem getrennten zweiten Reservoirbereich aufweist, kann die in dem ersten Reservoirbereich gespeicherte Kältemittelmenge niedrig gehalten werden, sodass bei einem Beginn des Klimatisierungsbetriebs das darin enthaltene Kältemittel schnell abgekühlt werden kann. Es wird somit ein gutes Ansprechverhalten erreicht. Es wird also aufgrund des ersten Kältemittelreservoirs, dessen Volumen klein gehalten werden kann, eine hohe Startleistungsfähigkeit bereitgestellt. Das Kältemittelreservoir kann z.B. durch einen Behälter gebildet sein, der in den ersten Reservoirbereich und den zweiten Reservoirbereich unterteilt ist. Alternativ kann das Kältemittelreservoir auch den ersten Reservoirbereich und den zweiten Reservoirbereich als separate, verbundene Behälter aufweisen, die z.B. räumlich getrennt sein können. In dem letzteren Fall wird eine effiziente Ausnutzung auch eines zerklüfteten zur Verfügung stehenden Bauraums ermöglicht. Es ist auch möglich, dass mehr als zwei separate Reservoirbereiche vorgesehen werden. Dadurch, dass bei Unterschreiten der vorbestimmten Kältemittelmenge in dem ersten Reservoirbereich Kältemittel aus dem zweiten Reservoirbereich nachgeführt wird, wird insgesamt eine große Kältemittelmenge für eine langanhaltende Standklimatisierung bereitgestellt und immer die Kältemittelmenge in dem ersten Reservoirbereich gering gehalten. Das Unterschreiten der vorbestimmten Kältemittelmenge in dem ersten Reservoirbereich kann dabei unmittelbar erfasst werden, z.B. über einen entsprechenden Füllstandssensor, oder aber auch mittelbar, z.B. durch Erfassen weiterer Parameter wie z.B. Druck, Temperatur, etc., die Rückschlüsse auf den Füllstand ermöglichen. Es kann in einer besonders einfachen Realisierung auch vorgesehen sein, dass eine Verbindung zwischen dem ersten Reservoirbereich und dem zweiten Reservoirbereich durch eine mechanische Einrichtung freigegeben wird, sobald die Kältemittelmenge in dem ersten Reservoirbereich die vorbestimmte Menge unterschreitet. Eine derartige Einrichtung kann z.B. durch ein Schwimmerventil gebildet sein, das automatisch öffnet, durch ein elektromagnetisches Ventil, das in Abhängigkeit von einem Messsignal öffnet, durch eine Membran, die z.B. druck- oder füllstandsabhängig eine Überführung von dem zweiten Reservoirbereich in den ersten Reservoirbereich bewirkt, oder durch eine andere dem Fachmann geläufige Struktur. Das Volumen des ersten Reservoirbereichs ist bevorzugt so bemessen, dass es eine ausreichende Versorgung des Verdampfers und eines Kältemittelkreises gewährleistet, jedoch keinen übermäßigen Kältemittelvorrat bereithält.

Bevorzugt weist das Kältemittelreservoir eine Vorrichtung auf, die bei Unterschreiten der vorbestimmten Kältemittelmenge in dem ersten Reservoirbereich öffnet, sodass Kältemittel übergeführt wird.

Bevorzugt ist der erste Reservoirbereich zur Einbindung in einen Kältemittelkreis mit einem Verdampfer und zum Bereitstellen von Kältemittel für den Verdampfer ausgebildet. In diesem Fall kann der erste Reservoirbereich mit einem kleinen Volumen zur Versorgung des Verdampfers ausgestaltet werden, sodass eine schnelle Abkühlung des darin enthaltenen Kältemittels erreicht wird. Es wird somit eine hohe Startleistungsfähigkeit erzielt.

Bevorzugt weist der erste Reservoirbereich einen Zulauf zum Zuführen von Kältemittel aus dem Bereich eines Verdampfers der mobilen Absorptionsklimaanlage auf. In diesem Fall wird durch den Verdampfer zirkuliertes Kältemittel, das dort nicht verdampft wurde, in den ersten Reservoirbereich zurückgeführt und das Temperaturniveau des in dem ersten Reservoirbereich enthaltenen Kältemittels wird niedrig gehalten.

Vorzugsweise weist der zweite Reservoirbereich einen Zulauf zum Zuführen von Kältemittel aus dem Bereich eines Kondensators der mobilen Absorptionsklimaanlage auf. In diesem Fall wird im kontinuierlichen Betrieb das von dem Kondensator kommende relativ warme, flüssige Kältemittel in den zweiten Reservoirbereich zugeführt, wodurch verhindert ist, dass das durch den Verdampfer (und den ersten Reservoirbereich) zirkulierte Kältemittel störend durch das warme Kältemittel erwärmt wird. Der zweite Reservoirbereich dient in diesem Fall als Akklimatisierungsstrecke für das warme Kältemittel, sodass Dampfschläge durch den Kontakt des warmen Kältemittels mit bereits abgekühltem Kältemittel verhindert werden.

Die Aufgabe wird ferner durch einen Absorptionsklimaanlagen-Kältemittelkreis für eine mobile Absorptionsklimaanlage nach Anspruch 6 gelöst, mit einem Verdampfer der zum Verdampfen von Kältemittel ausgebildet ist, um Kühlleistung bereitzustellen, und einem Kältemittelreservoir nach einem der Ansprüche 1 bis 5. Der Verdampfer und das Kältemittelreservoir sind derart verbunden, dass Kältemittel durch den Verdampfer und das Kältemittelreservoir zirkulierbar ist. In diesem Fall ist das Kältemittelreservoir in einen Kältemittelkreis eingebunden und der erste Reservoirbereich und der zweite Reservoirbereich können effizient genutzt werden, um sowohl eine hohe Startleistungsfähigkeit als auch eine anhaltende Standklimatisierungsfähigkeit sicherzustellen.

Bevorzugt ist der Absorbtionsklimaanlagen-Kältemittelkreis derart ausgebildet, dass Kältemittel durch den Verdampfer und den ersten Reservoirbereich zirkulierbar ist. Somit dient der erste Reservoirbereich, dessen Volumen klein gehalten werden kann, der sicheren Versorgung des Verdampfers mit Kältemittel und stellt eine hohe Startleistungsfähigkeit bereit.

Wenn der Absorbtionsklimaanlagen-Kältemittelkreis derart ausgebildet ist, dass flüssiges Kältemittel von einem Kondensator dem zweiten Reservoirbereich zuführbar ist, bildet der zweite Reservoirbereich effizient eine Akklimatisierungsstrecke für relativ warmes, von dem Kondensator kommendes Kältemittel.

Die Aufgabe wird auch durch eine mobile Absorptionsklimaanlage nach Anspruch 9 gelöst. Die mobile Absorptionsklimaanlage weist auf: einen Desorber, einen Kondensator, einen Verdampfer, einen Absorber, sowie einen Kältemittelkreis, der zum Zirkulieren von Kältemittel durch den Verdampfer und durch ein Kältemittelreservoir ausgebildet ist. Das Kältemittelreservoir weist zumindest einen ersten Reservoirbereich und einen von dem ersten Reservoirbereich getrennten zweiten Reservoirbereich auf. Das Kältemittelreservoir ist derart eingerichtet, dass bei Unterschreiten einer vorbestimmten Kältemittelmenge in dem ersten Reservoirbereich Kältemittel aus dem zweiten Reservoirbereich in den ersten Reservoirbereich übergeführt wird. Es werden sowohl eine lange Standklimatisierungsfähigkeit als auch eine hohe Startleistungsfähigkeit erreicht.

Bevorzugt ist der erste Reservoirbereich zum Zirkulieren von Kältemittel durch den Verdampfer in dem Kältemittelkreis eingebunden. In diesem Fall wird der erste Reservoirbereich effizient zum Bereitstellen einer hohen Startleistungsfähigkeit genutzt.

Vorzugsweise ist der zweite Reservoirbereich zum Zuführen von Kältemittel von dem Kondensator zu dem Kältemittelkreis eingerichtet, sodass Dampfschläge durch die Zuführung des relativ warmen Kältemittels von dem Kondensator vermieden werden.

Die Aufgabe wird ferner durch ein Verfahren zum Betreiben einer mobilen Absorptionsklimaanlage nach Anspruch 12 gelöst. Das Verfahren weist die Schritte auf: Zirkulieren von Kältemittel durch einen Kältemittelkreis, der einen Verdampfer und zumindest einen ersten Reservoirbereich zum Aufnehmen von Kältemittel aufweist, und Nachführen von Kältemittel aus einem von dem ersten Reservoirbereich getrennten zweiten Reservoirbereich in den ersten Reservoirbereich, wenn die Menge des Kältemittels in dem ersten Reservoirbereich eine vorgegebene Kältemittelmenge unterschreitet. Durch das Zirkulieren des Kältemittels durch den den ersten Reservoirbereich enthaltenden Kältemittelkreis wird eine hohe Startleistungsfähigkeit sichergestellt. Durch das Nachführen von Kältemittel aus dem zweiten Reservoirbereich wird eine lange Standklimatisierungsdauer erreicht.

Wenn flüssiges Kältemittel aus einem Kondensator in den zweiten Reservoirbereich nachgeführt wird, ist für das von dem Kondensator kommende, relativ warme Kältemittel eine Akklimatisierungsstrecke bereitgestellt.

Weitere Merkmale und Besonderheiten ergeben sich aus der nachfolgenden Beschreibung eines Ausführungsbeispiels unter Bezug auf die beigefügte Zeichnung.
Fig. 1 zeigt eine mobile Absorptionsklimaanlage gemäß einer Ausführungsform.
Fig. 2 zeigt den Bereich eines Kältemittelreservoirs gemäß der Ausführungsform.

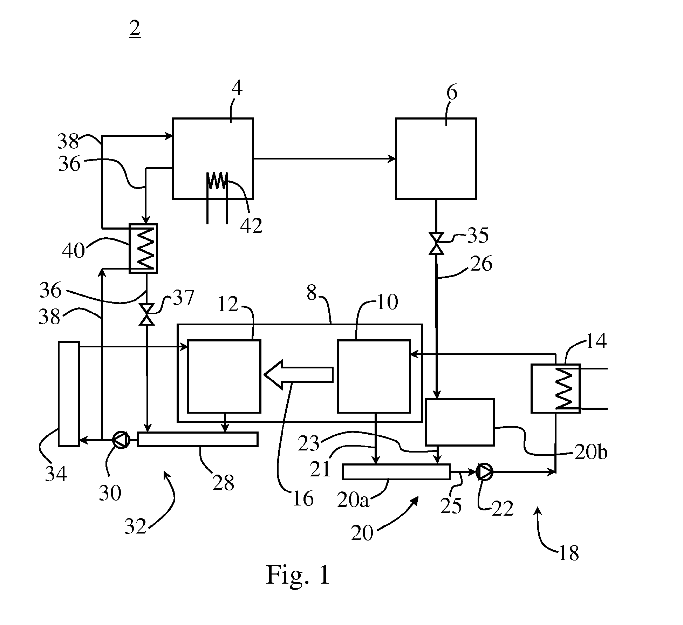

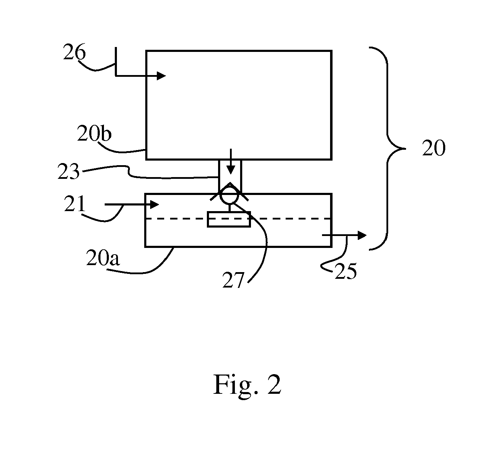

Nachfolgend wird eine Ausführungsform unter Bezugnahme auf Fig. 1 und Fig. 2 beschrieben. Die Darstellung in Fig. 1 zeigt schematisch den Aufbau einer mobilen Absorptionsklimaanlage 2.

Die Absorptionsklimaanlage 2 weist einen Desorber 4, einen Kondensator 6 und einen kombinierten Verdampfer/Absorber 8 auf. Obwohl in dem Ausführungsbeispiel der Verdampfer 10 und der Absorber 12 in einem kombinierten Verdampfer/Absorber 8 angeordnet sind (was in vielen Anwendungen Vorteile mit sich bringt), ist die Erfindung nicht auf diese Gestaltung beschränkt und es ist auch eine separate Ausgestaltung möglich.

Als binäre Mischung wird in dem vorliegenden Ausführungsbeispiel Lithiumbromid als Absorptionsmittel und Wasser als Kältemittel eingesetzt. Diese binäre Mischung wird in dem Desorber 4 erhitzt, wie in Fig. 1 schematisch durch einen Heizer 42 dargestellt ist. Bei der Anwendung der mobilen Absorptionsklimaanlage 2 in einem Fahrzeug kann die dafür erforderliche Wärme zum Beispiel durch die Motorabwärme über das Motorkühlsystem des Fahrzeugs bereitgestellt werden. Dadurch verdampft ein Teil des in der binären Mischung enthaltenen Kältemittels (Wasser), während im Desorber 4 eine mit dem Absorptionsmittel (Lithiumbromid) angereicherte Mischung zurückbleibt. Der Kältemitteldampf wird in den Kondensator 6 geleitet, in dem das Kältemittel wieder in die flüssige Phase zurückgeführt wird. Die für diese Rückführung in die flüssige Phase nötige Kühlleistung kann z.B. mittels eines (nicht dargestellten) Wärmetauschers (wie z.B. einem Luftkühler) bereitgestellt werden.

Der kombinierte Verdampfer/Absorber 8 wird unter Vakuum, insbesondere bei einem Druck von 5-10 mbar, gehalten. Der kombinierte Verdampfer/Absorber 8 weist als Verdampfer 10 mehrere (in der Figur nicht dargestellte) Verdampferelemente und als Absorber 12 mehrere (in Fig. 1 nicht dargestellte) Absorptionselemente auf. Der Verdampfer 10 und der Absorber 12 sind in Fig.1 schematisch als getrennt voneinander angeordnete Boxen dargestellt. In dem Verdampfer 10 wird ein Teil des Kältemittels verdampft, wodurch Kühlleistung bereitgestellt wird. Der entstandene Kältemitteldampf wird anschließend in dem Absorber 12 in eine mit dem Absorptionsmittel angereicherte binäre Mischung absorbiert. Dies ist in Fig. 1 schematisch durch den Pfeil 16 dargestellt.

In dem Bereich des Verdampfers 10 (im rechten Teil von Fig. 1) bzw. in Verbindung mit diesem ist ein Kältemittelreservoir 20 vorgesehen, über das dem Verdampfer 10 Kältemittel zum Verdampfen bereitgestellt wird. Das Kältemittelreservoir 20 weist einen ersten Reservoirbereich 20a und einen zweiten Reservoirbereich 20b auf. In der dargestellten Ausführungsform sind der erste Reservoirbereich 20a und der zweite Reservoirbereich 20b als separate Behälter zum Aufnehmen von Kältemittel ausgebildet. Es ist jedoch auch möglich, dass der erste Reservoirbereich 20a und der zweite Reservoirbereich 20b in einem gemeinsamen Behälter ausgebildet sind, der entsprechend unterteilt ist. Der erste Reservoirbereich 20a, der einen Teil des Kältemittelreservoirs 20 bildet, ist in einen Kältemittelkreis 18 eingebunden, über den flüssiges Kältemittel mittels einer Kältemittelpumpe 22 durch den Verdampfer 10, den ersten Reservoirbereich 20a und zwischen diesen angeordnete Leitungen zirkuliert werden kann. Es ist ein Zulauf 21 vorgesehen, über den nichtverdampftes Kältemittel von dem Verdampfer 10 in den ersten Reservoirbereich 20a gelangt. Es ist ferner eine Entnahmeleitung 25 vorgesehen, über die Kältemittel aus dem ersten Reservoirbereich 20a über den Kältemittelkreis 18 dem Verdampfer 10 zugeführt wird. Der erste Reservoirbereich 20a und der zweite Reservoirbereich 20b sind ferner über eine Verbindung 23 derart miteinander verbunden, dass Kältemittel aus dem zweiten Reservoirbereich 20b in den ersten Reservoirbereich 20a überführbar ist. Eine Zufuhrleitung 26 ist zum Zuführen von flüssigem Kältemittel aus dem Kondensator 6 zu dem zweiten Reservoirbereich 20b vorgesehen.

Der Kältemittelkreis 18 weist zumindest den Verdampfer 10, den ersten Reservoirbereich 20a, die Kältemittelpumpe 22 und zwischen diesen befindliche Leitungen auf. In der dargestellten Realisierung dient der Kältemittelkreis 18 ferner gleichzeitig zur Abführung von Kühlleistung von dem Verdampfer 10, um die Kühlleistung in einem zu kühlenden Bereich bereitzustellen. Der zu kühlende Bereich kann z.B. der Innenraum eines Fahrzeugs sein. Die Kühlleistung wird mittels eines ebenfalls in dem Kältemittelkreis 18 angeordneten Wärmetauschers 14 abgeführt. Der Wärmetauscher 14 kann z.B. in Verbindung mit einem Ventilator eine Luftströmung zum Kühlen eines Innenraums (z.B. einer Fahrzeugkabine) bereitstellen.

Fig. 2 zeigt schematisch den ersten Reservoirbereich 20a und den zweiten Reservoirbereich 20b etwas detaillierter. Bei der dargestellten Ausführungsform ist die Verbindung 23 derart ausgestaltet, dass Kältemittel aus dem zweiten Reservoirbereich 20b in den ersten Reservoirbereich 20a übergeführt wird, wenn die Kältemittelmenge in dem ersten Reservoirbereich 20a einen vorgegebenen Füllstand unterschreitet. Um dies zu erreichen, ist bei der dargestellten Ausführungsform eine Vorrichtung 27 vorgesehen, die die Verbindung zwischen dem zweiten Reservoirbereich 20b und dem ersten Reservoirbereich 20a freigibt, wenn die Kältemittelmenge einen zuvor festgelegten Schwellenwert unterschreitet, sodass Kältemittel aus dem zweiten Reservoirbereich 20b in den ersten Reservoirbereich 20a nachströmen kann. Bei der schematisch dargestellten Realisierung ist die Vorrichtung 27 als Schwimmerventil ausgebildet, das die Verbindung 23 verschließt, solange die Kältemittelmenge in dem ersten Reservoirbereich 20a über dem Schwellenwert ist, und die Verbindung 23 freigibt, wenn die Kältemittelmenge in dem ersten Reservoirbereich 20a den Schwellenwert unterschreitet. Bei dieser Realisierung handelt es sich um eine sehr einfache mechanische Realisierung, es sind jedoch auch andere dem Fachmann geläufige Lösungen möglich.

Zum Beispiel kann die Vorrichtung 27 auch durch ein elektromagnetisches Ventil gebildet sein, das in Abhängigkeit von einem Steuersignal die Verbindung 23 öffnet und schließt. Ein derartiges Steuersignal kann z.B. ein Signal von einem Füllstandssensor sein, der den Füllstand in dem ersten Reservoirbereich 20a überwacht. Es ist z.B. aber auch möglich, dass die Kältemittelmenge in dem ersten Reservoirbereich mittelbar über andere Parameter erfasst wird, die gemessen werden, wie z.B. Drücke und Temperaturen an verschiedenen Positionen in der Anlage etc., und das Steuersignal von einer Steuereinheit bereitgestellt wird. Es sind auch noch weitere Realisierungen möglich, die z.B. in Abhängigkeit von einer Druck- oder Füllstandshöhendifferenz eine Überführung von Kältemittel aus dem zweiten Reservoirbereich 20b in den ersten Reservoirbereich 20a bewirken. Z.B. kann eine Trennung des ersten Reservoirbereichs 20a und des zweiten Reservoirbereichs 20b auch durch eine Membran erfolgen. Eine Möglichkeit der Realisierung besteht darin, als Vorrichtung 27 zwischen dem zweiten Reservoirbereich 20b und dem ersten Reservoirbereich 20a eine teildurchlässige Membran vorzusehen, die in Abhängigkeit von den Druckverhältnissen beidseits der Membran innerhalb einer Zeit t nur ein bestimmtes, vorgegebenes Volumen V durchlässt.

In einem kontinuierlichen Betrieb der mobilen Absorptionsklimaanlage 2 wird das in dem Verdampfer 10 verdampfte Kältemittel durch die Zufuhr von flüssigem Kältemittel aus dem Kondensator 6 in den Kältemittelkreis 18 über die Zufuhrleitung 26 und den zweiten Reservoirbereich 20b ausgeglichen, sodass sich ein weitestgehend stationärer Betrieb einstellt. Wie in Fig. 1 schematisch dargestellt ist, ist in der Zufuhrleitung 26 in an sich bekannter Weise ein Drosselorgan 35 vorgesehen. Das Drosselorgan 35 kann z.B. durch ein Ventil, eine Blende, ein Kapillarrohr etc. gebildet sein. Die Kältemittelpumpe 22 bewirkt eine Zirkulation des Kältemittels durch den Kältemittelkreis 18.

Auf der Seite des Absorbers 12 ist ein Absorptionsmittelkreis 32 (Rezirkulationskreis für mit Absorptionsmittel angereicherte Mischung) vorgesehen, der den Absorber 12, ein Absorptionsmittelreservoir 28 zur Aufnahme eines Vorrats an mit Absorptionsmittel angereicherter Mischung und eine Absorptionsmittelpumpe 30 aufweist. In der dargestellten Ausführungsform weist der Absorptionsmittelkreis 32 ferner einen weiteren Wärmetauscher 34 zur Abführung von Wärme aus dem Absorptionsmittelkreis 32 auf. Bei einer Anwendung in einer mobilen Absorptionsklimaanlage für ein Fahrzeug kann der Wärmetauscher 34 z.B. durch einen Luftkühler gebildet sein. Der Wärmetauscher 34 dient dazu, die Temperatur der in dem Absorptionsmittelkreis 32 zirkulierten mit Absorptionsmittel angereicherten Mischung abzusenken, um eine hohe Absorptionsfähigkeit im Bereich des Absorbers 12 bereitzustellen.

Auf der Seite des Desorbers 4 muss diesem zur Aufrechterhaltung eines kontinuierlichen Betriebs eine Mischung mit einer relativ niedrigen Konzentration an Absorptionsmittel (und entsprechend hoher Konzentration an Kältemittel) und dem Absorber 12 eine Mischung mit einer relativ hohen Konzentration an Absorptionsmittel nachgeführt werden. Hierzu wird eine Mischung mit einer relativ hohen Konzentration an Absorptionsmittel aus dem Desorber 4 über eine Verbindungsleitung 36 zu dem Absorber 12 nachgeführt. Bei der dargestellten Ausführungsform mündet die Verbindungsleitung 36 in das Absorptionsmittelreservoir 28 und wird dem Absorber 12 über den Absorptionsmittelkreis 32 zugeführt. In der Verbindungsleitung 36 ist in an sich bekannter Weise ein Drosselorgan 37 vorgesehen. Das Drosselorgan 37 kann z.B. durch ein Ventil, eine Blende, ein Kapillarrohr etc. gebildet sein.

Ferner wird eine Mischung mit einer relativ niedrigen Konzentration an Absorptionsmittel von dem Absorber 12 über eine Verbindungsleitung 38 dem Desorber 4 zugeführt. Bei der gezeigten Ausführungsform zweigt die Verbindungsleitung 38 stromabwärts der Absorptionsmittelpumpe 30 von dem Absorptionsmittelkreis ab. Zwischen den Verbindungsleitungen 36 und 38 kann, wie in Fig. 1 dargestellt ist, bevorzugt ein Wärmetauscher 40 vorgesehen sein, der bewirkt, dass das von dem Absorptionsmittelkreis 32 kommende relativ kalte Absorptionsmittel vor dem Eintritt in den Desorber 4 vorgewärmt wird und das von dem Desorber 4 kommende relativ warme Absorptionsmittel vor dem Eintritt in den Absorptionsmittelkreis 32 vorgekühlt wird. Obwohl in Fig. 1 relativ spezielle Positionen dargestellt sind, an denen die Verbindungsleitungen mit dem Absorptionsmittelkreis 32 in Verbindung stehen, sind auch andere Anordnungen möglich.

Aufgrund der oben beschriebenen Ausgestaltung mit dem Kältemittelreservoir 20, das den ersten Reservoirbereich 20a und den zweiten Reservoirbereich 20b aufweist, ist auch für eine lange Dauer ein diskontinuierlicher Betrieb möglich, bei dem Kühlleistung im Bereich des Verdampfers 10 bereitgestellt wird, ohne dass in dem Desorber 4 ein Austreiben von Kältemittel aus der binären Mischung erfolgt. Ferner ist aufgrund dieser Ausgestaltung gleichzeitig sichergestellt, dass die mobile Absorptionsklimaanlage 2 eine hohe Startleistungsfähigkeit hat. Dies wird im Folgenden beschrieben.

Der zweite Reservoirbereich 20b ist derart ausgebildet, dass dieser ein größeres Volumen an flüssigem Kältemittel aufnehmen kann als der erste Reservoirbereich 20a. Der erste Reservoirbereich 20a und der zweite Reservoirbereich 20b sind derart bemessen, dass sie insgesamt eine große Menge an flüssigem Kältemittel aufbewahren können. Selbst wenn in dem Desorber 4 für eine längere Zeit kein oder kein nennenswerter Desorbtionsprozess stattfindet, steht daher in dem Kältemittelreservoir 20, das den ersten Reservoirbereich 20a und den zweiten Reservoirbereich 20b aufweist, eine große Kältemittelmenge bereit, die in dem Verdampfer 10 verdampft werden kann, um Kühlleistung bereitzustellen. Dies stellt sicher, dass über eine lange Zeit ein "Standklimatisierungsbetrieb" erfolgen kann.

In den einen Primärkreis bildenden Kältemittelkreis 18, durch den Kältemittel zirkuliert wird, um im Bereich des Verdampfers 10 Kühlleistung bereitzustellen, ist nur der erste Reservoirbereich 20a eingebunden, der nur eine begrenzte Menge an Kältemittel aufnimmt. Aufgrund der begrenzten Menge an Kältemittel weist dieses somit auch nur eine relativ geringe Wärmekapazität auf. Bei Beginn eines Klimatisierungsbetriebs kann das in dem ersten Reservoirbereich 20a gespeicherte Kältemittel sehr schnell auf die erforderliche Betriebstemperatur abgekühlt werden. Es wird daher durch die beschriebene Ausgestaltung eine gute Startleistungsfähigkeit bereitgestellt. Erst wenn die Kältemittelmenge in dem ersten Reservoirbereich 20a den vorgegebenen Schwellenwert unterschreitet, wird Kältemittel aus dem zweiten Reservoirbereich 20b über die Verbindung 23 in den ersten Reservoirbereich 20a nachgeführt. Es ist somit sichergestellt, dass auch bei einem lang andauernden Standklimatisierungsbetrieb immer Kältemittel für den Verdampfer 10 bereitgestellt wird, sich jedoch in dem Kältemittelkreis 18 über den Kältemittel durch den Verdampfer 10 zirkuliert wird, jeweils nur eine begrenzte Menge an Kältemittel befindet. Das Volumen des ersten Reservoirbereichs 20a ist somit auf das erforderliche reduziert, um den Startbetrieb der mobilen Absorptionsklimaanlage sicherzustellen und ist in den Primärkreis der Anlage eingebunden. Der zweite Reservoirbereich 20b dient als passiver Kältemittelspeicher (als Sekundärkreis), der seinen Inhalt nur bei Bedarf (Kältemittelabnahme im Primärkreis) in kleinen Mengen sukzessiv an den Primärkreis abgibt.

In einem kontinuierlichen Betrieb der mobilen Absorptionsklimaanlage 2, bei dem Kältemittel aus dem Desorber 4 und den Kondensator 6 in das Kältemittelreservoir 20 nachgeführt wird, wird das flüssige, relativ warme von dem Kondensator 6 kommende Kältemittel in den zweiten Reservoirbereich 20b nachgeführt, in dessen relativ großem Volumen es sich zunächst weiter abkühlen kann. Es wird somit eine störende Erwärmung des Primärkreises vermieden, die auftreten würde, wenn das von dem Kondensator 6 kommende Kältemittel unmittelbar in den Bereich des Kältemittelreservoirs 20 nachgeführt würde, der in den Kältemittelkreis 18 eingebunden ist. Der zweite Reservoirbereich dient somit auch als Akklimatisierungsstrecke für das nachgeführte Kältemittel, wodurch unerwünschte Dampfschläge vermieden werden können.

Obwohl ein relativ spezieller Aufbau einer mobilen Absorptionsklimaanlage 2 als Ausführungsbeispiel beschrieben wurde, ist die Realisierung des Kältemittelreservoirs und des Kältemittelkreises jedoch nicht auf diesen speziellen Aufbau beschränkt. Insbesondere kann die Gestaltung der mobilen Absorptionsklimaanlage im Bereich des Absorbers und des Desorbers von dem beschriebenen Beispiel abweichen.

## Patentansprüche

1. Kältemittelreservoir (20) für eine mobile Absorptionsklimaanlage, das aufweist:
zumindest einen ersten Reservoirbereich (20a) zum Aufnehmen von Kältemittel und zumindest einen von dem ersten Reservoirbereich abgetrennten zweiten Reservoirbereich (20b) zum Aufnehmen von Kältemittel,
wobei das Kältemittelreservoir (20) derart eingerichtet ist, dass bei Unterschreiten einer vorbestimmten Kältemittelmenge in dem ersten Reservoirbereich (20a) Kältemittel aus dem zweiten Reservoirbereich (20b) in den ersten Reservoirbereich (20a) übergeführt wird.

2. Kältemittelreservoir nach Anspruch 1, wobei das Kältemittelreservoir (20) eine Vorrichtung (27) aufweist, die bei Unterschreiten der vorbestimmten Kältemittelmenge in dem ersten Reservoirbereich (20a) öffnet, sodass Kältemittel übergeführt wird.

3. Kältemittelreservoir nach einem der Ansprüche 1 oder 2, wobei der erste Reservoirbereich (20a) zur Einbindung in einen Kältemittelkreis (18) mit einem Verdampfer (10) und zum Bereitstellen von Kältemittel für den Verdampfer ausgebildet ist.

4. Kältemittelreservoir nach einem der Ansprüche 1 bis 3, wobei der erste Reservoirbereich (20a) einen Zulauf (21) zum Zuführen von Kältemittel aus dem Bereich eines Verdampfers (10) der mobilen Absorptionsklimaanlage aufweist.

5. Kältemittelreservoir nach einem der Ansprüche 1 bis 4, wobei der zweite Reservoirbereich (20b) eine Zuführleitung (26) zum Zuführen von Kältemittel aus dem Bereich eines Kondensators (6) der mobilen Absorptionsklimaanlage aufweist.

6. Absorptionsklimaanlagen-Kältemittelkreis (18) für eine mobile Absorptionsklimaanlage mit einem Verdampfer (10) der zum Verdampfen von Kältemittel ausgebildet ist, um Kühlleistung bereitzustellen,
und einem Kältemittelreservoir (20) nach einem der Ansprüche 1 bis 5,
wobei der Verdampfer (10) und das Kältemittelreservoir (20) derart verbunden sind, dass Kältemittel durch den Verdampfer und das Kältemittelreservoir zirkulierbar ist.

7. Absorbtionsklimaanlagen-Kältemittelkreis nach Anspruch 6, der derart ausgebildet ist, dass Kältemittel durch den Verdampfer (10) und den ersten Reservoirbereich (20a) zirkulierbar ist.

8. Absorbtionsklimaanlagen-Kältemittelkreis nach einem der Ansprüche 6 oder 7, der derart ausgebildet ist, dass flüssiges Kältemittel von einem Kondensator (6) dem zweiten Reservoirbereich (20b) zuführbar ist.

9. Mobile Absorptionsklimaanlage mit:
einem Desorber (4),
einem Kondensator (6),
einem Verdampfer (10),
einem Absorber (12),
sowie einem Kältemittelkreis (18), der zum Zirkulieren von Kältemittel durch den Verdampfer (10) und durch ein Kältemittelreservoir (20) ausgebildet ist,
wobei das Kältemittelreservoir (20) zumindest einen ersten Reservoirbereich (20a) und einen von dem ersten Reservoirbereich getrennten zweiten Reservoirbereich (20b) aufweist und
das Kältemittelreservoir (20) derart eingerichtet ist, dass bei Unterschreiten einer vorbestimmten Kältemittelmenge in dem ersten Reservoirbereich (20a) Kältemittel aus dem zweiten Reservoirbereich (20b) in den ersten Reservoirbereich übergeführt wird.

10. Mobile Absorptionsklimaanlage nach Anspruch 9, bei der der erste Reservoirbereich (20a) zum Zirkulieren von Kältemittel durch den Verdampfer (10) in den Kältemittelkreis (18) eingebunden ist.

11. Mobile Absorptionsklimaanlage nach Anspruch 9 oder 10, bei der der zweite Reservoirbereich (20b) zum Zuführen von Kältemittel von dem Kondensator (6) zu dem Kältemittelkreis (18) eingerichtet ist.

12. Verfahren zum Betreiben einer mobilen Absorptionsklimaanlage mit den Schritten:
Zirkulieren von Kältemittel durch einen Kältemittelkreis (18), der einen Verdampfer (10) und zumindest einen ersten Reservoirbereich (20a) zum Aufnehmen von Kältemittel aufweist, und
Nachführen von Kältemittel aus einem von dem ersten Reservoirbereich (20a) getrennten zweiten Reservoirbereich (20b) in den ersten Reservoirbereich, wenn die Menge des Kältemittels in dem ersten Reservoirbereich eine vorgegebene Kältemittelmenge unterschreitet.

13. Verfahren nach Anspruch 12, bei dem flüssiges Kältemittel aus einem Kondensator (6) in den zweiten Reservoirbereich (20b) nachgeführt wird.
